# EUROPÄISCHE PATENTSCHRIFT

(11) **EP 0 841 506 B1**
(45) Veröffentlichungstag und Bekanntmachung des Hinweises auf die Patenterteilung: **07.08.2002**
(21) Anmeldenummer: 97118207.6
(22) Anmeldetag: 21.10.1997
(51) Int. Cl.: F16H 61/40

(54) **Hydrostatisches Getriebe**
Hydrostatic transmission
Transmission hydrostatique

(30) Priorität: 06.11.1996 DE 19645699
(43) Veröffentlichungstag der Anmeldung: 13.05.1998
(73) Patentinhaber: SMS Demag AG, 40237 Düsseldorf (DE)
(72) Erfinder: Hild, Berthold, 57299 Burbach (DE); Stötzel, Helmut, 57271 Hilchenbach (DE)
(74) Vertreter: Valentin, Ekkehard, Dipl.-Ing.

(56) Entgegenhaltungen:
- DE-A- 4 422 424
- US-A- 4 528 813
- US-A- 5 211 015
- PATENT ABSTRACTS OF JAPAN vol. 004, no. 053 (M-008), 19. April 1980 (1980-04-19) & JP 55 019904 A (SUMITOMO HEAVY IND LTD), 13. Februar 1980 (1980-02-13)

## Beschreibung

Die Erfindung betrifft ein hydrostatisches Getriebe mit einem geschlossenen Hydraulikkreislauf, das einen von einer äußeren Druckquelle beidseitig verspannten, über Arbeitsleitungen an eine reversierbare Hydropumpe angeschlossenen Verbraucher aufweist, wobei der Hydraulikkreislauf einen ersten, von dem Leckstrom der Hydropumpe abhängigen kontinuierlichen Spül- und Speisekreislauf und ggfs. einen zweiten, davon getrennten, an die äußere Druckmittelquelle angeschlossenen zweiten, diskontinuierlichen Spülkreislauf aufweist, mit einer zugeordneten einstellbaren Regelvorrichtung, welche über ein Ventil die Hydropumpenanstellung bestimmt, wobei die ggf. außerhalb der unmittelbaren Umgebung des hydrostatischen Getriebes angeordnete Regelvorrichtung mit einer dem hydrostatischen Getriebe direkt zugeordneten Steuervorrichtung zusammenwirkt, welche das als Servoventil ausgebildete Ventil aufweist, und die Arbeitsleitungen mit Druck-Istwertgebem ausgestattet sind.

Eine Hydropumpe gehört durch die DE 44 22 424 A1 zum Stand der Technik. Es hat sich jedoch herausgestellt, daß durch Toleranzen der hydraulischen und elektronischen Bauteile des gattungsgemäßen hydrostatischen Getriebes, aber auch durch unterschiedlichen Verschleiß in den Düsen und Spalten sich Unregelmäßigkeiten ergeben, die einen exakten, reproduzierbaren Betrieb des hydrostatischen Getriebes ausschließt. Hinzu kommt, daß infolge von Fehlern, z.B. von Fehlern der Weggeber zur Istgrößenerfassung eines Hubweges des hydrostatischen Getriebes, Signale verfälscht werden oder ganz ausbleiben, wodurch es zu Beschädigungen bzw. zu Zerstörungen des hydrostatischen Getriebes kommen kann.

Ein gattungsgemäßes hydrostatisches Getriebe ist der US-A-4 528 813 zu entnehmen. Obwohl hier bereits eine Regelvorrichtung und eine Steuervorrichtung für das hydrostatische Getriebe vorgesehen ist, sind Unregelmäßigkeiten nicht auszuschließen, die auf nicht exakte Grundeinstellungen sowie den unterschiedlichen Verschleiß beruhen.

Der Erfindung liegt die Aufgabe zugrunde, ein gattungsgemäßes hydrostatisches Getriebe so weiterzubilden, daß ein genauer, reproduzierbarer Betrieb des Getriebes möglich ist, wobei Überlastungen des Systems ausgeschlossen werden sollen.

Dazu wird vorgeschlagen, daß zur Justierung der Anordnung das Servoventil auf manuelle Steuerung umschaltbar ist, daß zwischen dem Servoventil und der Hyropumpen-Anstellung ein manuell betätigbares Sperrventil vorgesehen ist, und daß die der Verspannung dienenden Drosseln sowohl einstellbar als auch sperrbar sind.

Durch die Verwendung des Servoventils läßt sich die Anstellung der Hydropumpe exakt einstellen. Für die Justierung der einzelnen Bauteile des hydrostatischen Getriebes läßt sich das Servoventil manuell genau betätigen, um so die Hydropumpe auf die Fördermenge "Null" zu justieren. Dazu müssen, wie im Verfahrensanspruch 4 ausgeführt, die Drosseln gesperrt werden. Die Druck-Istwertgeber in den Arbeitsleitungen signalisieren den "Nullwert" der Fördermenge dann, wenn beide Druck-Istwertgeber gleiche Werte abgeben. Sowohl die Drosseln als auch das Servoventil sind ebenfalls justierbar.

Werden die von Gebern aufgenommenen Signale einer dem Überlastschutz dienenden Regelvorrichtung aufgeschaltet, so kann diese die Istwerte der Geber mit vorgegebenen Sollwerten vergleichen und ggf. das hydrostatische Getriebe abbzw. umschalten,um so Beschädigungen oder Zerstörungen zu vermeiden.

Über eine gemeinsame Steuervorrichtung mit entsprechender Anzeigevorrichtung läßt sich der Justiervorgang der einzelnen Bauteile sowie die Maßnahmen für den Überlastschutz kontrollieren und bedienen.

Die Erfindung wird anhand einer Zeichnung näher erläutert. Dabei zeigen
- Figur 1: das hydrostatische Getriebe mit entsprechendem Verbraucher und
- Figur 2: die Steuervorrichtung für das hydrostatische Getriebe.

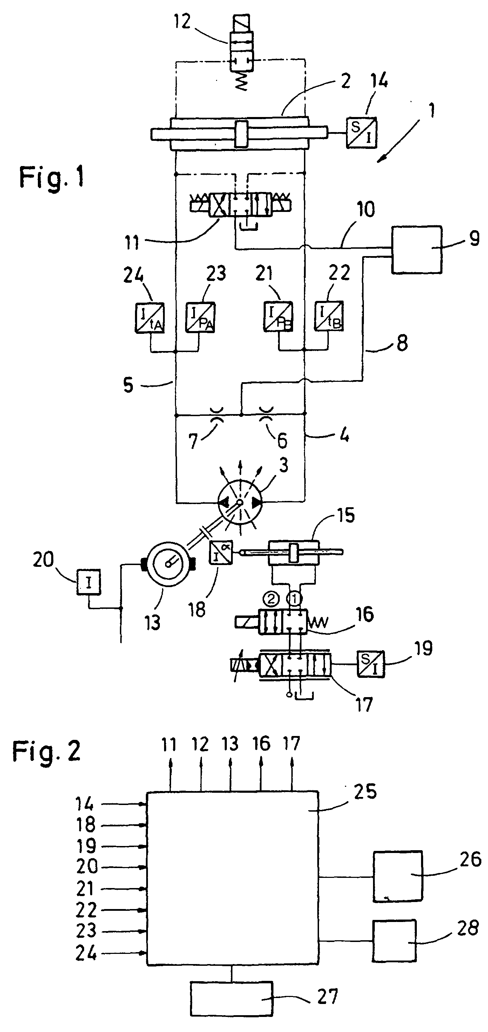

Figur 1 zeigt ein hydrostatisches Getriebe 1, welches mit einem Verbraucher 2 einen geschlossenen Hydraulikkreislauf bildet. Das hydrostatische Getriebe 1 besteht aus einer Hydropumpe 3, welche über Arbeitsleitungen 4, 5 mit dem Verbraucher 2 verbunden ist. Über die einstellbaren bzw. sperrbaren Drosseln 6, 7 ist das hydrostatische Getriebe 1 verspannbar. Zwischen den Drosseln 6, 7 ist eine Zuführleitung 8 angeschlossen, welche die Drosseln 6, 7 mit einer äußeren Druckmittelquelle 9 verbindet. Die Druckmittelquelle 9 ist weiterhin über eine Leitung 10 mit einem 4/3-Wegeventil 11 verbunden, über welches der Hydraulikkreislauf diskontinuierlich gespült werden kann, während ein kontinuierliches Spülen des Hydraulikkreislaufes über die Leitung 6 und die Drosseln 6, 7 erfolgt, wodurch die Leckagen des Systems regelmäßig ausgeglichen werden. Ein dem Verbraucher 2 parallel geschaltetes Bypaßventil 12 kann unter anderem auch zum Schutz des Verbrauchers 2 elektrisch betätigt werden. Die Hydropumpe 3 wird über einen Motor 13 angetrieben. Dem Verbraucher 2 ist ein Weg-Istwertgeber 14 zugeordnet.

Die Hydropumpe 3 ist über einen Pumpen-Verstellzylinder 15 anstellbar. Der Pumpen-Verstellzylinder 15 ist über ein Sperrventil 16 mit einem Servoventil 17 verbunden und weist einen Winkel-Istwertgeber 18 auf, während dem Servoventil 17 ein Weg-Istwert-Geber 19 zugeordnet ist. Der den Motor 13 durchfließende Strom wird über einen Strommesser 20 ermittelt. Der Arbeitsleitung 4 ist sowohl ein Druck-Istwertgeber 21 als auch ein Temperatur-Istwertgeber 22 zugeordnet.

Die Arbeitsleitung 5 weist entsprechend einen Druck-Istwert-Geber 23 und einen Temperatur-Istwertgeber 24 auf.

Die Istsignale der erwähnten Geber 14, 18, 19, 21 bis 24 sowie die des Strommessers 20 werden auf eine Steuervorrichtung 25 nach Fig. 2 gegeben. Über eine Eingabeeinheit können Sollwerte in die Steuervorrichtung 25 eingegeben werden. Es können aber auch ermittelte Istwerte als Sollwertvorgaben dienen. Ausgänge der Steuervorrichtung 25 sind auf das 4/3-Wegeventil 11, das Bypaßventil 12, den Motor 13, das Sperrventil 16 sowie das Servoventil 17 geschaltet.

Die ermittelten Istwerte werden in der Steuervorrichtung 25 mit den vorgegebenen Sollwerten verglichen. Bei Überschreiten eines der Weg-Druck-, Winkel- bzw. Temperatursollwerte durch die entsprechend ermittelten Istwerte werden zum Überlastschutz über die Ausgänge mindestens eines der Ventile 11, 12, 16, 17 und/oder der Motor 13 ab- bzw. umgeschaltet oder in eine derartige Stellung gebracht, daß dem Überlastfall entgegengewirkt wird.

Für die Justage der einzelnen Bauelemente wird wie folgt vorgegangen: Über die Steuervorrichtung 25 wird die nicht gezeigte Regelvorrichtung für den Normalbetrieb des hydrostatischen Getriebes abgeschaltet. Die Drosseln 6, 7 werden gesperrt. Das Sperrventil 16 sowie das Servoventil 17 werden über die Steuervorrichtung 25 auf manuellen Betrieb umgeschaltet, wobei das Sperrventil 16 in den geöffneten Zustand geschaltet wird. Durch Verschieben des Servoventils 17 wird der Pumpen-Verstellzylinder 15 und damit die Anstellung der Hydropumpe 3 so lange verändert, bis die Druckmittel-Istwertgeber 21, 23 gleiche Drücke anzeigen. Somit herrschen in den Arbeitsleitungen 4, 5 gleiche Drücke, die Hydropumpe 3 fördert, wenn überhaupt, in beide Richtungen gleich viel Druckmedium. Diese Stellung entspricht der Pumpenstellung "Null". Der entsprechende, mit dem Winkelgeber 18 gemessene Winkel wird in die Regelvorrichtung 25 als Pumpen-Nullstellung bzw. als Nullwinkel eingegeben und gespeichert. Die Justierung der Hydropumpe 3 ist damit abgeschlossen.

Um die Drosseln 6, 7 zu justieren, wird die Hydropumpe 3 über das Sperrventil 16 in der ermittelten Pumpen-Nullstellung gehalten. Das Sperrventil 16 wird dazu gesperrt. Nunmehr erfolgt eine Speisung des Hydraulikkreislaufes von der Druckmittelquelle 9 über die Zuführungsleitung 8 auf die Drosseln 6, 7, welche so eingestellt werden, daß wiederum die Druck-Istwertgeber 21, 23 gleiche Druckwerte anzeigen. Die Drosseln werden in dieser Stellung, die die gleichen Druckwerte garantieren, justiert und festgehalten.

Zum Schluß sollte noch das Servoventil 17 justiert werden. Dazu wird das Sperrventil 16 geöffnet und das Servoventil 17 manuell so lange verschoben, bis der Winkel-Istwertgeber 18 des Pumpen-Verstellzylinders 15 die zuvor gespeicherte Null-Winkel-Stellung signalisiert. Diese Null-Stellung des Servoventils wird ebenfalls als Referenzwert in der Steuervorrichtung 25 und ggfs. in der nicht gezeigten Regelvorrichtung gespeichert.

Die Steuervorrichtung 25 weist Anzeigegeräte 27 auf, von denen die Druck-Istwerte, die Druck-Sollwerte, die Unterschiede der Druck-Istwerte zu den Druck-Sollwerten sowie die Differenz der gemessenen Druck-Istwerte der beiden Geber 21, 23 angezeigt werden kann. Auch die Weg-, Druck-, Winkel- und Stromwerte der übrigen Istwertgeber sowie der jeweils zugehörigen Sollwerte sind auf der Anzeigevorrichtung anzeigbar. Über die Eingabeeinheit 26 und/oder eine Bedienungseinheit 28 läßt sich das hydrostatische Getriebe manuell steuern und entsprechend justieren.

Nach erfolgter Justierung des hydrostatischen Getriebes wird über die Steuervorrichtung 25 die Regelvorrichtung wieder aktiviert. Die Steuervorrichtung 25 dient nunmehr dem Überlastschutz.

Dazu werden die der Steuervorrichtung 25 aufgeschalteten Soll- und Istwerte miteinander verglichen und beim Überschreiten mindestens eines der vorgegebenen Sollwerte wird das hydrostatische Getriebe 1 von der Steuervorrichtung 25 ab- bzw. umgeschaltet.

### Bezugszeichenübersicht

- 1: hydrostatisches Getriebe
- 2: Verbraucher
- 3: Hydropumpe
- 4: Arbeitsleitung
- 5: Arbeitsleitung
- 6: Drossel
- 7: Drossel
- 8: Zuführleitung
- 9: Druckmittelquelle
- 10: Leitung
- 11: 4/3-Wegeventil
- 12: Bypaß-Ventil
- 13: Motor
- 14: Weg-Istwertgeber
- 15: Pumpen-Verstellzylinder
- 16: Sperrventil
- 17: Servoventil
- 18: Winkel-Istwertgeber
- 19: Weg-Istwertgeber
- 20: Strommesser
- 21: Druck-Istwertgeber
- 22: Temperatur-Istwertgeber
- 23: Druck-Istwertgeber
- 24: Temperatur-Istwertgeber
- 25: Steuervorrichtung
- 26: Eingabeeinheit
- 27: Anzeigevorrichtung
- 28: Bedienungseinheit

## Patentansprüche

1. Hydrostatisches Getriebe mit einem geschlossenen Hydraulikkreislauf, das einen von einer äußeren Druckquelle beidseitig verspannten, über Arbeitsleitungen an eine reversierbare Hydropumpe angeschlossenen Verbraucher aufweist, wobei der Hydraulikkreislauf einen ersten, von dem Leckstrom der Hydropumpe abhängigen kontinuierlichen Spül- und Speisekreislauf und ggfs. einen zweiten, davon getrennten, an die äußere Druckmittelquelle angeschlossenen zweiten, diskontinuierlichen Spülkreislauf aufweist, mit einer zugeordneten einstellbaren Regelvorrichtung, welche über ein Ventil die Hydropumpen-Anstellung bestimmt, wobei die ggfs. außerhalb der unmittelbaren Umgebung des hydrostatischen Getriebes angeordnete Regelvorrichtung mit einer dem hydrostatischen Getriebe direkt zugeordneten Steuervorrichtung (25) zusammenwirkt, welche das als Servoventil (17) ausgebildete Ventil aufweist und die Arbeitsleitungen (4, 5) mit Druck-Istwertgebern (21, 23) ausgestattet sind,
**dadurch gekennzeichnet,**
**daß** zur Justierung der Anordnung das Servoventil (17) mittels der Steuervorrichtung (25) auf manuelle Steuerung umschaltbar ist, daß zwischen dem Servoventil (17) und der Hydropumpen-Anstellung ein mittels der Steuervorrichtung (25) auf manuellen Betrieb umschaltbares Sperrventil (16) vorgesehen ist, und daß die der Verspannung dienenden Drosseln (6, 7) sowohl einstellbar als auch sperrbar sind.

2. Hydrostatisches Getriebe nach Anspruch 1,
**dadurch gekennzeichnet,**
**daß** die Einstellorgane für die manuelle Steuerung des Servoventils (17), der Drosseln (6, 7) sowie die Sperrung des Sperrventils (16) mit Anzeigevorrichtungen (27) der Druck-Istwertgeber (21, 23) in der gemeinsamen Steuervorrichtung (25) zusammengefaßt sind.

3. Hydrostatisches Getriebe nach Anspruch 2,
**dadurch gekennzeichnet,**
**daß** die Steuervorrichtung (25) zusätzlich mit die Ausgangswerte von Weg-Istwertgebern (14; 19) des Verbrauchers (2) und/oder des Servoventils (17) von Winkel-Istwertgebern (18) der Hydropumpe (3), von Druckmitteltemperaturen erfassenden Temperatur-Istwertgebern (22, 24) sowie die Stromaufnahme eines AntriebsMotors der Hydropumpe (3) erfassenden Gebern (Strommesser 20) sowie die von den Gebern erfaßten Werte anzeigenden und/oder auswertenden Anordnung ausgestattet ist.

4. Verfahren zur Nulljustierung der Hydropumpen des hydraulischen Getriebes nach einem der Ansprüche 1 bis 3,
**dadurch gekennzeichnet,**
**daß** nach manuell bewirktem Sperren der Drosseln (6, 7) durch manuelles Verstellen des Servoventils (17) bis zur Gleichheit der Druckwerte der den Arbeitsleitungen (4, 5) zugeordneten Druckgeber (21, 23) der eine Fördermenge "Null" entsprechende Anstellwinkel der Hydropumpe (3) ermittelbar ist.

5. Verfahren zur Synchronisierung der Verspannung des Verbrauchers nach Anspruch 4,
**dadurch gekennzeichnet,**
**daß** bei auf die Fördermenge "Null" eingestellter und für den Justiervorgang auf dieser arretierter Hydropumpe (3) eine Speisung der die Vorspannung bewirkenden Drosseln (6, 7) mit Druckmittel bewirkt wird, und daß eine Einstellung der Drosseln (6, 7) vornehmbar ist, welche gleiche Druckwerte der den Arbeitsleitungen (4, 5) zugeordneten Druckgeber (21, 23) sichert.

6. Verfahren nach Anspruch 4 oder 5,
**dadurch gekennzeichnet,**
**daß** durch manuelle Einstellung des Servoventils (17) bis zur Erreichung der Fördermenge "Null" der Hydropumpe (3) und/oder zur Erreichung gleicher Druckwerte der den Arbeitsleitungen (4, 5) zugeordneten Druck-Istwertgebern (21, 23) und/oder zur Erlangung des gespeicherten dem "Nullwert" der Förderung entsprechenden Winkel des dem Pumpen-Verstellzylinder (15) zugeordneten Winkel-Istwertgeber (18) diese Position des Servoventils (17) gespeichert und als "Nullstellung" der Steuervorrichtung (25) vorgegeben wird.

7. Vorrichtung nach einem der Ansprüche 1 bis 3,
**dadurch gekennzeichnet,**
**daß** die Stuervorrichtung (25) eine Überwachungsvorrichtung aufweist, welche die Ausgangswerte der Geber (14, 18-24) aufnimmt, mit den den jeweiligen Gebern entsprechend vorgegebenen Sollwerten vergleicht und bei Überschreiten zumindest eines der Sollwerte eine Abschaltung des hydrostatischen Getriebes (1) bewirkt.

8. Hydrostatisches Getriebe nach Anspruch 7,
**dadurch gekennzeichnet,**
**daß** die Abschaltung verzögert bewirkt wird, wobei das Verzögerungsintervall vom Grad der Überschreitung des vorgegebenen Wertes einstellbar abhängt.

## Claims

1. Hydrostatic transmission with a closed hydraulic circuit, which comprises a consumer loaded at both sides from an extemal pressure source and connected to a reversible hydropump by way of working ducts, wherein the hydraulic circuit comprises a first continuous scavenging and supply circuit dependent on the leakage flow of the hydropump and optionally a second discontinuous scavenging circuit which is separate from the first circuit and connected with the extemal pressure medium source, with an associated adjustable regulating device which determines the hydropump setting by way of a valve, wherein the regulating device, which is optionally arranged outside the immediate environment of the hydrostatic transmission, co-operates with a control device (25), which is directly associated with the hydrostatic transmission and comprises the valve, which is constructed as a servo valve (17), and the working ducts (4, 5) are equipped with pressure actual-value transmitters (21, 23), **characterised in that** for adjusting the arrangement the servo valve (17) can be switched over by means of the control device (25) to manual control, that a blocking valve (16) is provided between the servo valve (17) and the hydropump setting and can be switched over by means of the control device (25) to manual operation, and that the throttles serving for the loading are not only adjustable, but also blockable.

2. Hydrostatic transmission according to claim 1, **characterised in that** the adjusting elements for the manual control of the servo valve (17), the throttles (6, 7) and the blocking of the blocking valve (25) are, together with display devices (27) of the pressure actual-value transmitters (21, 23), combined into the common control device (25).

3. Hydrostatic transmission according to claim 2, **characterised in that** the control device (25) is additionally fumished with the output values of travel actual-value transmitters (14; 19) of the consumer (2) and/or of the servo valve (17), from angle actual-value transmitters (18) of the hydropump (3), from temperature actual-value transmitters (22, 24) detecting pressure-medium temperatures as well as transmitters (ammeter 20) detecting the current take-up of a drive motor of the hydropump (3) as well as the arrangement displaying and/or evaluating the values detected by the transmitters.

4. Method of zero-setting the hydropump of the hydraulic transmission according to one of claims 1 to 3, **characterised in that**, after manually effected blocking of the throttles (6, 7), by manual adjustment of the servo value (17) until equalisation of the pressure values of the pressure transmitters (21, 23) associated with the working ducts the setting angle, which corresponds with the conveyed quantity 'zero', of the hydropump (3) is ascertainable.

5. Method for synchronising the loading of the consumer according to claim 4. **characterised in that** when the hydropump (3) is set to the conveyed quantity 'zero' and locked thereto for the adjusting process a supply of the throttles (6, 7), which produce the preloading, with pressure medium is effected and that a setting of the throttles (6, 7) can be undertaken which secures equal pressure values of the pressure transmitters (21, 23) associated with the working ducts (4, 5).

6. Method according to claim 4 or 5, **characterised in that** by manual setting of the servo valve (17) until attainment of the conveyed quantity 'zero' of the hydropump (3) and/or attainment of equal pressure values of the pressure actual-value transmitters (21, 23) associated with the working ducts (4, 5) and/or obtaining of the stored angle, which corresponds with the 'zero value' of the conveying, of the angle actual-value transmitter (18) associated with the pump adjusting cylinder (15) this position of the servo valve (17) is stored and preset as 'zero setting' of the control device (25).

7. Device according to one of claims 1 to 3, **characterised in that** the control device (25) comprises a monitoring device which receives the output values of the transmitters (14, 18 to 24), compares them with the predetermined target values corresponding with the respective transmitters, and causes switching-off of the hydrostatic transmission when at least one of the target values is exceeded.

8. Hydrostatic transmission according to claim 7, **characterised in that** the switching-off is effected with a delay, wherein the delay interval adjustably depends on the degree of exceeding of the predetermined value.

## Revendications

1. Transmission hydrostatique comportant un circuit hydraulique fermé, laquelle comprend un appareil consommateur mis sous pression des deux côtés par une source de pression externe et raccordé à une pompe hydraulique réversible via des conduites de travail, le circuit hydraulique comprenant un premier circuit de rinçage et d'alimentation continu dépendant du courant de fuite de la pompe hydraulique et le cas échéant un deuxième circuit de rinçage discontinu séparé du premier et raccordé à la source de fluide sous pression externe, comportant un dispositif de régulation réglable associé qui détermine via une valve le réglage de la pompe hydraulique, le dispositif de régulation agencé le cas échéant à l'extérieur de l'environnement immédiat de la transmission hydrostatique coopérant avec un dispositif de commande (25) associé directement à la transmission hydrostatique et comprenant la valve réalisée sous forme de servo-valve (17), et les conduites de travail (4, 5) sont munies de capteurs (21, 23) de valeur de pression réelle, **caractérisée en ce que** pour ajuster l'agencement, la servo-valve (17) est commutable vers la commande manuelle au moyen du dispositif de commande (25), **en ce qu'**une valve de blocage (16) commutable vers le fonctionnement manuel au moyen du dispositif de commande (25) est prévue entre la servo-valve (17) et le réglage de la pompe hydraulique, et **en ce que** les étranglements (6, 7) servant à la mise sous pression peuvent être réglés et également bloqués.

2. Transmission hydrostatique selon la revendication 1, **caractérisée en ce que** les organes de réglage pour la commande manuelle de la servo-valve (17), des étranglements (6, 7) ainsi que du blocage de la valve de blocage (16) sont regroupés avec des dispositifs d'affichage (27) des capteurs (21, 23) de valeur de pression réelle dans le dispositif de commande commun (25).

3. Transmission hydrostatique selon la revendication 2, **caractérisée en ce que** le dispositif de commande (25) est muni en supplément d'un agencement qui affiche et/ou qui évalue les valeurs de sortie de capteurs (14 ; 19) de valeur de course réelle de l'appareil consommateur (2) et/ou de la servo-valve (17), de capteurs (18) de valeur angulaire réelle de la pompe hydraulique (3), de capteurs (22, 24) de valeur de température réelle détectant les températures du fluide sous pression, ainsi que des capteurs (ampèremètres 20) détectant la consommation de courant électrique d'un moteur d'entraînement de la pompe hydraulique (3), ainsi que les valeurs détectées par les capteurs.

4. Procédé pour le réglage du point zéro des pompes hydrauliques de la transmission hydraulique selon l'une des revendications 1 à 3, **caractérisé en ce qu'**après le blocage manuel des étranglements (6, 7) par un déplacement manuel de la servo-valve (17), on peut déterminer l'angle de réglage de la pompe hydraulique (3), lequel correspond à une quantité de refoulement "nulle" jusqu'à l'égalité des valeurs de pression des capteurs de pression (21, 23) associés aux conduites de travail (4, 5).

5. Procédé pour la synchronisation de la mise sous pression de l'appareil consommateur selon la revendication 4, **caractérisé en ce que**, lorsque la pompe hydraulique (3) est réglée à la quantité de refoulement "nulle" et arrêtée à celle-ci pour l'opération d'ajustage, on provoque une alimentation en fluide de pression des étranglements (6, 7) procurant la précontrainte, et **en ce que** l'on peut procéder à un réglage des étranglements (6, 7) qui assure des valeurs de pression égales des capteurs de pression (21, 23) associés aux conduites de travail (4, 5).

6. Procédé selon l'une ou l'autre des revendications 4 et 5, **caractérisé en ce que** par un réglage manuel de la servo-valve (17) jusqu'à atteindre la quantité de refoulement "nulle" de la pompe hydraulique (3) et/ou jusqu'à atteindre des valeurs de pression égales dans les capteurs (21, 23) de valeur de pression réelle associés aux conduites de travail (4, 5) et/ou pour obtenir l'angle mémorisé, correspondant à la "valeur nulle" du refoulement, du capteur (18) de valeur angulaire réelle associé au cylindre (15) de déplacement de pompe, on mémorise cette position de la servo-valve (17) et on l'impose comme "position nulle" du dispositif de commande (25).

7. Transmission hydrostatique selon l'une quelconque des revendications 1 à 3, **caractérisée en ce que** le dispositif de commande (25) comprend un dispositif de surveillance qui reçoit les valeurs de sortie des capteurs (14, 18 à 24), il les compare avec des valeurs de consigne imposées en correspondance aux capteurs respectifs, et lors du dépassement de l'une au moins des valeurs de consigne, il provoque une coupure de la transmission hydrostatique (1).

8. Transmission hydrostatique selon la revendication 7, **caractérisé en ce que** la coupure est retardée, l'intervalle de retard dépendant du degré du dépassement de la valeur prédéterminée.
